# EUROPEAN PATENT APPLICATION

(11) **EP 4 650 980 A1**
(43) Date of publication of application: **19.11.2025**
(21) Application number: 24850345.0
(22) Date of filing: 27.03.2024
(51) Int. Cl.: G06F 16/332, G06F 16/248, G06F 16/3329, G06F 16/9032

(54) **QUERY METHOD AND APPARATUS, DEVICE AND STORAGE MEDIUM**

(71) Applicant: Beijing Zitiao Network Technology Co., Ltd., Beijing 100190 (CN)
(72) Inventor: XIA, Liang, Beijing 100028 (CN); LUO, Song, Beijing 100028 (CN); SUN, Hui, Beijing 100028 (CN)
(74) Representative: Grünecker Patent- und Rechtsanwälte PartG mbB
(86) International application number: PCT/CN2024/084220
(87) International publication number: WO 2025/199828

(57) **Abstract**

Embodiments of the disclosure provide a method, apparatus, device and storage medium for querying. The method includes: determining, in a conversational interaction application, whether a query request from a user relates to a search requirement in response to receiving the query request; obtaining a plurality of search results matching the query request with a search system in response to determining that the query request relates to a search requirement; and presenting a response for the query request, the response being generated based on the plurality of search results. In this way, in accordance with a determination that the query request relates to the search requirement, the search result is determined by the search system, and then the response to the query request is determined based on the search result. This helps to improve the accuracy and efficiency of the query.

## Description

### FIELD

Example implementations of the present disclosure generally relate to the field of computers, and in particular, to method, apparatus, device, and computer-readable storage medium for querying.

### BACKGROUND

With the rapid development of the Internet, more and more applications are designed to provide various services to users. For example, an application may provide a query service to a user. The application may obtain a query request (for example, a query text input by the user, that is, a "question") from the user, and provide a query result corresponding to the question based on the query request. However, the query result provided by the existing application may not meet the user requirement, and it is desirable to improve the accuracy and efficiency of the query.

### SUMMARY

**In** a first aspect of the present disclosure, a method for querying is provided. The method includes: determining, in a conversational interaction application, whether a query request from a user relates to a search requirement in response to receiving the query request; obtaining a plurality of search results matching the query request with a search system in response to determining that the query request relates to a search requirement; and presenting a response for the query request, the response being generated based on the plurality of search results.

**In** a second aspect of the present disclosure, an apparatus for querying is provided. The apparatus includes: a requirement determination module configured to determine whether a query request from a user relates to a search requirement in response to receiving the query request; a result obtaining module configured to obtain a plurality of search results matching the query request with a search system in response to determining that the query request relates to a search requirement; and a response presentation module configured to present a response for the query request, the response being generated based on the plurality of search results.

**In** a third aspect of the present disclosure, an electronic device is provided. The electronic device includes: at least one processing unit; and at least one memory coupled to the at least one processing unit and storing instructions for execution by the at least one processing unit, the instructions, when executed by the at least one processing unit, causing the electronic device to perform the method according to the first aspect of the present disclosure.

**In** a fourth aspect of the present disclosure, there is provided a computer-readable storage medium having stored thereon a computer program which, when executed by a processor, causes the processor to implement the method according to the first aspect of the present disclosure.

According to a fifth aspect of the present disclosure, there is provided a computer program product, comprising a computer program, where the computer program, when executed by a processor, implements the method according to the first aspect of the present disclosure.

**It** is to be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of the various implementations of the present disclosure will become more apparent from the following detailed description taken in conjunction with the accompanying drawings. Throughout the drawings, the same or similar reference numerals represent the same or similar elements, among which:
FIG. 1 illustrates a schematic diagram of an example environment in which embodiments of the present disclosure can be implemented;
FIG. 2 shows a schematic diagram of a framework for querying according to some embodiments of the present disclosure;
FIG. 3A to FIG. 3H illustrate schematic diagrams of example pages according to some embodiments of the present disclosure;
FIG. 4 shows a flowchart of a process for querying according to some embodiments of the present disclosure;
FIG. 5 shows a schematic structural block diagram of an apparatus for querying according to some embodiments of the present disclosure; and
FIG. 6 illustrates a block diagram of an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it is to be understood that the present disclosure may be implemented in various forms, and should not be construed as limited to embodiments set forth herein. On the contrary, these embodiments are provided for a more thorough and complete understanding of the present disclosure. It is to be understood that the drawings and embodiments of the present disclosure are merely for the purpose of illustration, rather than limiting the protection scope of the present disclosure.

In the description of embodiments of the present disclosure, the term "includes" and its variants are to be read as open terms that mean "includes, but is not limited to." The term "based on" is to be read as "based at least in part on." The terms "one embodiment" or "an embodiment" are to be read as "at least one embodiment." The term "some embodiments" is to be read as "at least some embodiments." Other definitions, either explicit or implicit, may be included below.

Herein, unless explicitly stated, "in response to A" performs one step does not imply that this step is performed immediately after "A", but may include one or more intermediate steps.

It may be understood that data involved in the technical solution (including but not limited to the data itself, the obtaining or use of the data) should follow the requirements of the corresponding laws and regulations and related regulations.

It may be understood that, before the technical solutions disclosed in embodiments of the present disclosure are used, the types of personal information related to the present disclosure, the usage scope, the usage scenario and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user, so that the user may autonomously select whether to provide personal information to software or hardware executing the operation of the technical solution of the present disclosure according to the prompt information.

As an optional but non-limiting implementation, in response to receiving an active request of the user, a manner of sending prompt information to the user may be, for example, a pop-up window manner, and prompt information may be presented in a text manner in the pop-up window. In addition, the pop-up window may further carry a selection control for the user to select "agree" or "not agree" to provide personal information to the electronic device.

It may be understood that the foregoing notification and the process for obtaining a user authorization are merely illustrative, and do not constitute a limitation on implementations of the present disclosure, and other manners meeting related laws and regulations may also be applied to implementations of the present disclosure.

As used herein, the term "model" may learn an association relationship between respective inputs and outputs from training data such that a corresponding output may be generated for a given input after training is complete. The generation of the model may be based on machine learning techniques. Deep learning is a machine learning algorithm that processes inputs and provides corresponding outputs by using a multi-layer processing unit. The neural network model is one example of a deep learning-based model. As used herein, a "model" may also be referred to as a "machine learning model," a "learning model," a "machine learning network," or a "learning network," and these terms are used interchangeably herein.

A "neural network" is a deep learning-based machine learning network. The neural network is capable of processing inputs and providing respective outputs, which typically include an input layer and an output layer and one or more hidden layers between the input layer and the output layer. Neural networks used in deep learning applications typically include many hidden layers, thereby increasing the depth of the network. Each layer of the neural network is connected in sequence such that the output of the previous layer is provided as an input to the next layer, where the input layer receives the input of the neural network and the output of the output layer serves as the final output of the neural network. Each layer of the neural network includes one or more nodes (also referred to as processing nodes or neurons), each node processing input from the previous layer.

Generally, machine learning may generally include three phases, a training phase, a testing phase, and an application phase (also referred to as an inference phase). At the training stage, a given model may be trained using a large amount of training data, constantly updating the parameter values, until the model is able to obtain consistent inferences from the training data that satisfy the expected objectives. By training, the model may be considered to be able to learn from the training data an association from input to output (also referred to as mapping of input to output). The parameter values of the trained model are determined. In the testing phase, the test input is applied to the trained model to test whether the model can provide the correct output, thereby determining the performance of the model. The testing phase may sometimes be fused in a training phase. In the application or inference stage, the trained model may be used to process the actual model input based on the parameter value obtained by training, to determine a corresponding model output.

### Example Environment

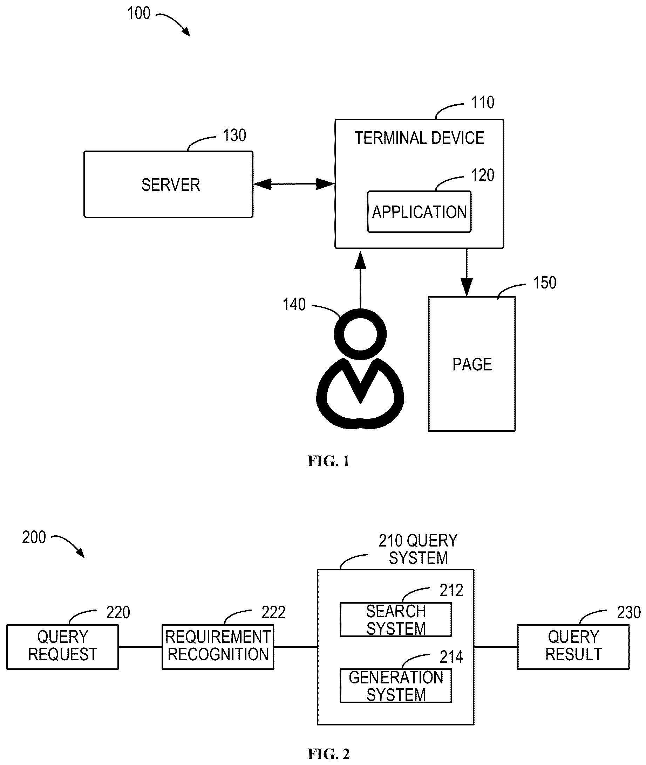

FIG. 1 illustrates a schematic diagram of an example environment 100 in which embodiments of the present disclosure can be implemented. In this example environment 100, an application 120 is installed in a terminal device 110. A user 140 may interact with the application 120 via the terminal device 110 and/or an attachment device of the terminal device 110.

In some embodiments, the application 120 may be any suitable application that may provide query services. In the environment 100 of FIG. 1, the terminal device 110 may present a page 150 of the application 120 if the application 120 is active. The page 150 may include various pages that are capable to be provided by the application 120, such as a query page, a search page, a search result presentation page, and the like.

In some embodiments, terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It is to be understood that the structures and functions of the various elements in the environment 100 are described for exemplary purposes only and do not imply any limitation to the scope of the present disclosure.

### Process for Querying

Traditionally, an application or system that may provide a query service may determine, in response to receiving a query request from a user, data matching the query request from a database based directly on the query request, or determine data matching the query request based on previously learned knowledge. The application or system may determine a query result for the query request based on the data. If the database or the previously learned knowledge does not include data matching the query request, the application cannot provide an accurate query result to the user.

In order to at least partially solve the deficiencies in the prior art, according to an embodiment of the present disclosure, a method for querying is provided. FIG. 2 illustrates a schematic diagram of a framework 200 for querying according to some embodiments of the present disclosure. The framework 200 may be implemented at the terminal device 110 and the server 130. Specifically, the terminal device 110 may receive the query request 220 in the conversational interactive application, and access a query system 210 at the server device, and the query system 210 includes a search system 212 and a generation system 214.

The terminal device 110 may receive a query request 220 from a user, such as the user 140. The terminal device 110 may receive the query request 220 from the user in any suitable manner, which is not limited in the present disclosure. For example, the terminal device 110 may provide an input box, and receive the query request 220 from the user via the input box. The query request 220 may be of any suitable type including, but not limited to, text, voice, video, images, and the like.

In an embodiment, the query process may be performed by the terminal device 110 accessing the server 130, and the terminal device 110 may execute a requirement recognition 222 on the query request 220 in response to receiving the query request 220 from the user, to determine whether the query request 220 relates to the search requirement. The terminal device 110 may, in turn, utilize the query system 210 to determine a query result 230 for the query request 220 based on a determination of whether a search requirement is involved.

In an embodiment, whether the query request relates to the search requirement may be determined based on a plurality of manners: for example, in response to determining that the semantic content expressed by the query request matches the predetermined search semantic associated with the search requirement, the query request is determined to be related to the search requirement. For another example, in response to determining that the query request includes the predetermined search keyword associated with the search requirement, the query request is determined to be related to the search requirement.

Regarding the specific manner of determining the requirement, the terminal device 110 may determine whether the query request 220 relates to the search requirement in any suitable manner. For example, the terminal device 110 may perform semantic analysis on the query request by means of a machine learning model (also referred to as a model for short) to determine whether the query request 220 relates to a search requirement. The machine learning model may be any suitable model, for example, may include a transformer model, an RNN, a CNN, and the like. Here, the machine learning model may be trained with labeled samples, and the trained machine learning model may directly output whether the query request relates to a search requirement.

Alternatively, and/or additionally, it may be determined whether the query request 220 relates to a search requirement based on textual analysis. If the result of the text analysis indicates that the query request 220 relates to timeliness content (i.e., the content updated in real time), it is determined that the query request 220 relates to the search requirement. For another example, assuming that the result of the text analysis indicates that the query request 220 relates to knowledge content (i.e., content that is not updated in real time), it is determined that the query request 220 does not relate to the search requirement. Specifically, keywords related to search requirements may be predefined, such as changes, weather, forecasts, flights, tickets, fares, or keywords specifying future points in time, and the like. At this time, assuming that the query request is "change of product XXXX", it may be determined that the query request relates to the search request.

In some embodiments, upon performing a requirement recognition 222, the terminal device 110 may determine whether the query request 220 includes a plurality of sub-requests. A semantic analysis may be performed for the query request to determine semantic content expressed by the query request, and in response to determining that the semantic content includes a plurality of semantic content, the query request is determined to include a plurality of sub-requests. Specifically, whether the query request 220 includes a plurality of sub-requests may be determined, for example, by means of a model. If a plurality of sub-requests are included, specific contents of the plurality of sub-requests are determined by means of a model. Here, the machine learning model may be trained with labeled samples, and the trained machine learning model may directly output a plurality of sub-requests included in the query request. Alternatively, and/or additionally, appropriate hint words may be input to the language model, and the process of splitting the request is implemented using a language model.

In response to determining that the query request 220 includes a plurality of sub-requests, the query system 210 respectively determines a plurality of search results that match the plurality of sub-requests. The terminal device 110 may, for example, determine whether the plurality of sub-requests include a sub-request related to a search requirement, and if the sub-request relating to the search requirement is determined, obtain, with the searching system 212, a search result matching the sub-request related to the search requirement.

In some embodiments, the terminal device 110 may further determine a potential requirement of the user based on the query request 220. The potential requirement for example, may indicate a subsequent query request to be sent by the user after the query request 220. The terminal device 110 may then utilize the search system 212 to obtain search results matching the potential requirement. For example, if the query request 220 is "XX tourist attraction," the query system 210 may determine that the potential requirement corresponding to the query request 220 may include "travel guide of XX tourist attraction," "accommodation recommendation of XX tourist attraction," "food of XX tourist attraction," "best travel month of XX tourist attraction," and the like. It is to be understood that although the foregoing process of performing the requirement recognition by the terminal device 110 is described above, the foregoing process may be performed by the server 130 and/or both the server 130 and the terminal device 110.

If it is determined that the query request 220 relates to the search requirement, the terminal device 110 may invoke the search system 212 in the query system 210 to obtain a plurality of search results matching the query request 220, and then generate the query result 230 for the query request 220 based on the plurality of search results by using the generation system 214 (that is, the query result 230 is generated based on the plurality of search results). The search system 210 may include, for example, any suitable search engine that may obtain information matching the query request 220 from the Internet (the process may also be referred to as a networked search). Such information may include naturally existing web pages, videos, images, and the like. The generation system 214 may include, for example, any suitable machine learning model, such as a language model (LM), a multimodal based generative model, or the like.

In some embodiments, if it is determined that the query request 220 does not relate to the search requirement, the query system 210 may directly obtain data matching the query request 220 from the knowledge base (the knowledge base may be a database local to the terminal device 110, or may be a database installed in other devices) or previously learned knowledge, and generate the query result 230 for the query request based on the obtained data by using the generation system. It may be understood that, in a case that the query request 220 includes a plurality of sub-requests, for a sub-request that does not involve a search requirement, the query system 210 may directly obtain, from a database or previously learned knowledge, data that matches the sub-request that does not relate to the search requirement.

The terminal device 110 may then present the query result 230 to the user as a response to the query request. For example, if the query request input by the user is in a form of a session message in a session window, the terminal device 110 may further present the query result 230 to the user in a form of a response message for the session message.

With embodiment of the present disclosure, the search result may be determined by means of the search system under the condition that the query request relates to the search requirement, and then the response to the query request is determined based on the search result. This helps to improve the accuracy and efficiency of the query.

### Example Pages for Querying

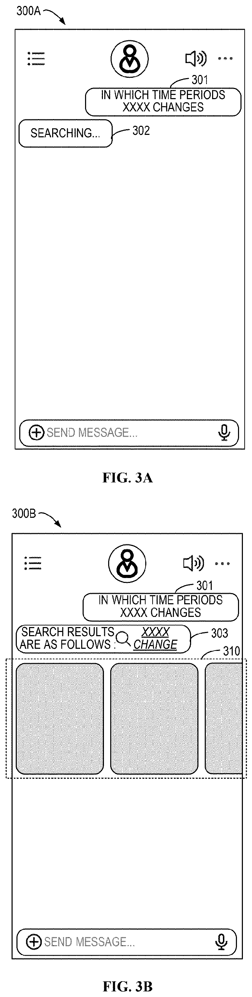

FIG. 3A to FIG. 3H illustrate schematic diagrams of example pages 300A to 300H (which may also be referred to simply as examples 300A to 300H), in accordance with some embodiments of the present disclosure. It is to be understood that the pages shown in the drawings are merely examples, and various page designs may actually exist. Individual graphical elements in a page may have different arrangements and different visual representations, one or more of which may be omitted or replaced, and one or more other elements may also be present. Embodiments of the present disclosure are not limited in this respect.

The pages shown in examples 300A to 300H may be presented at the terminal device 110. For ease of discussion, the examples 300A to 300H will be described with reference to the environment 100 of FIG. 1 and the framework 200 of FIG. 2. It is to be noted that the aforementioned operations performed by the terminal device 110 and operations performed by the terminal device 110 described subsequently may be performed by a related application (for example, the application 120) installed on the terminal device 110. In some embodiments, the operations performed on the terminal device 110 may be completed with the assistance of the server 130.

In some embodiments, the terminal device 110 may provide conversational query pages. The terminal device 110 may receive a session message from the user via the conversational query page, and determine the message as a query request from the user. For example, as shown in FIG. 3A, the example 300A shows an example of a conversational query page. The example 300A may include, for example, an input box. The terminal device 110 may receive a user input from the user via the input box and present this user input as a session message from the user (e.g., a session message 301) in the example 300A. Here, the user queries the change in the particular product "XXXX" via the session message 301.

As mentioned above, the terminal device 110 may determine the session message 301 as a query request from the user, and determine whether the query request relates to a search requirement (i.e., whether to perform a networking search by using the search system 212). The terminal device 110 may obtain a plurality of search results matching the query request by using the search system 212 in the query system 210 in response to determining that the query request relates to the search requirement. Further, a query result (i.e., a response to the query request) for the query request may be generated based on the plurality of search results by using the generation system 214 in the query system 210. The terminal device 110 may present a response to the query request.

Regarding the specific manner of presenting the response, in some embodiments, as the query system 210 obtains the search result for a certain time, the terminal device 110 may also present, in the conversational query page, prompt information for waiting for the search. The prompt information may include any suitable content, such as text, images, videos, and the like. For example, as shown in FIG. 3A, the terminal device 110 may further present, in the example 300A, prompt information 302 for waiting for the search, for example, the prompt information 302 may include text "searching...". For example, the terminal device 110 may no longer present the prompt information 302 in response to obtaining the plurality of search results.

In some embodiments, the terminal device 110 may present, in the conversational query page, a set of regions corresponding to a set of information items (which may also be referred to as media items, media content items, etc. ) in a process of obtaining a plurality of search results matching the query request by means of the search system 212, or after a plurality of search results matching the query request are obtained by means of the search system 212. The set of information items respectively correspond to a set of search results of the plurality of search results, and each of the information items may be generated based on a corresponding search result. For example, the terminal device 110 may directly obtain the information item from the search result, or generate the information item based on content of the search result. The terminal device 110 may present, in response to determining that target information item in the set of information items (the target information item is generated based on the target search result corresponding to the target information item in the set of search results), the target information item in the target region in the set of regions.

In some embodiments, the set of regions and the set of search results may be in a one-to-one correspondence according to an order of the set of search results, e.g., the Nth region of the set of regions corresponds to the Nth search result of the set of search results. The terminal device 110 may present, in response to the N-th information item corresponding to the N-th search result being generated, the information item in the corresponding N-th region. In some embodiments, the terminal device 110 may also present the set of information items in the set of regions in an order that the set of information items are determined. For example, if the N-th information item in the set of information items is generated, the terminal device 110 may present the information item in the i-th region.

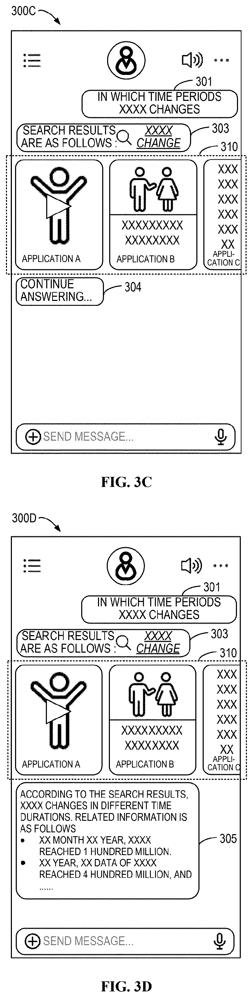

For example, as shown in FIG. 3B and FIG. 3C, the example 300B and example 300C illustrate two examples of conversational query pages. The example 300B may include and a region 310. The region 310 may, for example, be used to present a set of regions corresponding to a set of information items (e.g., a set of regions may be presented in the form of a card). The terminal device 110 may present the example 300C in response to a target information item in the set of information items being generated. In the example 300C, the terminal device 110 may present the target information item in a target region of a set of regions in the region 310 in response to the target information item in the set of information items being generated. The target information item may include any suitable content such as an image, a video, an audio, a text, a text set, or the like.

In some embodiments, the terminal device 110 may further, in response to the set of information items already being presented but a response to the query request being not generated, continue to present the prompt information for waiting for the response in the conversational query page. The prompt information may also include any suitable content, such as text, images, videos, and the like. In the example 300C, the terminal device 110 may continue to present prompt information 304 for waiting for the response below the region 310, for example, the prompt information 304 may include a text "continue answering". For example, the terminal device 110 may no longer present the prompt information 304 in response to the response being generated. As shown in FIG. 3D, the terminal device 110 may present a response 305 in the example 300D in response to the generated response 305 without presenting the prompt information 304.

In some embodiments, the terminal device 110 may further determine, in response to receiving a first interaction with the target information item, a candidate information item to be presented of the plurality of search results based on a direction of the first interaction. Here, the first interaction may include, for example, a sliding operation. The candidate information item may be, for example, an information item corresponding to a search result other than the set of search results in the plurality of search results. The terminal device 110 may also present the candidate information item at a location associated with the target information item.

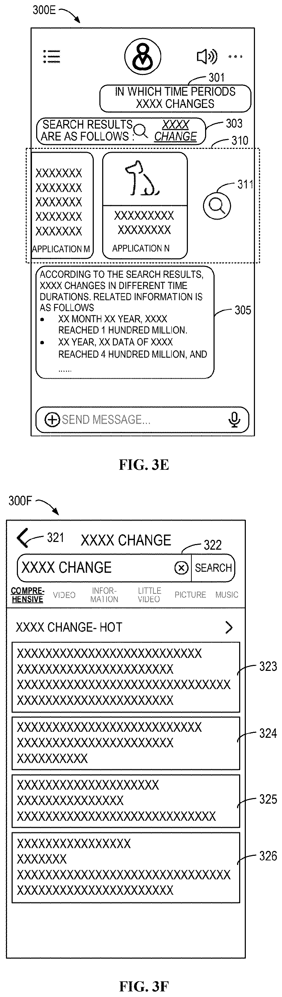

In some embodiments, as the page area of the example 300B is limited, the terminal device 110 may present a partial region in a set of regions in the region 310. For example, the terminal device 110 may present, in response to receiving a trigger operation for the set of regions (for example, a leftward sliding operation, a rightward sliding operation, a double-click operation, and the like), a plurality of regions outside the partial region of the set of regions. For example, the terminal device 110 may present, for example, 2.5 regions (that is, 2.5 information items are presented) in the region 310, the set of regions may include, for example, 10 regions (that is, the set of information items includes 10 information items), and the terminal device 110 may present, in response to receiving a sliding operation for the 2.5 regions (which may also be referred to as the 2.5 information items), regions other than the 2.5 regions in the 10 regions (that is, other information items other than the 2.5 information items in the 10 information items). As shown in FIG. 3D and FIG. 3E, the terminal device 110 may present the example 300E in response to receiving a leftward sliding operation for the region 310 in the example 300D. The example 300E may include a different information item other than the partial of the information items in the example 300D.

For example, if the plurality of search results includes 20 search results, the set of search results includes the first 10 (for example, 1-10) search results, the terminal device 110 may present, in the region 310, a set of information items corresponding to the 10 search results. The terminal device 110 may present, in response to receiving the leftward sliding operation on the last media item in the set of information items, the candidate information item corresponding to the last 10 (for example, 11-20) search results in the 20 search results at the region 310.

In some embodiments, the terminal device 110 may further present the target search result in response to receiving the second interaction for the target information item. The terminal device 110 may, for example, in response to receiving a second interaction (for example, a trigger operation on the target information item) for the target information item, present a presentation page of the target information item, and present the target search result in the presentation page. For example, if the target search result is a website, the terminal device 110 may present, in response to receiving the second interaction for the target information item, a webpage (that is, a landing page) corresponding to the website. For example, the terminal device 110 may further return the conversational query page in response to receiving a third interaction (for example, a trigger operation on a closed control) used to close the target search result.

In some embodiments, the terminal device 110 may further present, in the conversational query page, an access control for accessing the plurality of search results, and in response to receiving a fourth interaction for the access control, present the plurality of search results in the list page. For example, the terminal device 110 may present, in response to a plurality of search results being searched, a session message for viewing the plurality of search results in the conversational query page, where the session message may be considered as an access control.

Returning to the example 300B, the example 300B may also include, for example, a session message 303. For example, the terminal device 110 may present the session message 303 in response to obtaining the plurality of search results. For example, the terminal device 110 may present, in response to receiving a trigger operation on the session message 303, a search result presentation page (i.e., an example 300F) including a plurality of search results as shown in FIG. 3F. The example 300F may include, for example, a return control 321, a search box 322, and a plurality of search results (e.g., a search result 323, a search result 324, a search result 325, a search result 326, etc.). The terminal device 110 may present the query request in the search box 322. The terminal device 110 may return the example 300B in response to receiving a trigger operation on the return control 321.

Alternatively, or in addition, in some embodiments, the terminal device 110 may also present a specific access control for accessing a plurality of search results in the region 310. For example, referring back to FIG. 3E, the terminal device 110 may present the access control 311 behind the set of regions in the region 310. For example, the terminal device 110 may present, in response to receiving a trigger operation on the access control 311, a search result presentation page including a plurality of search results as shown in FIG. 3F.

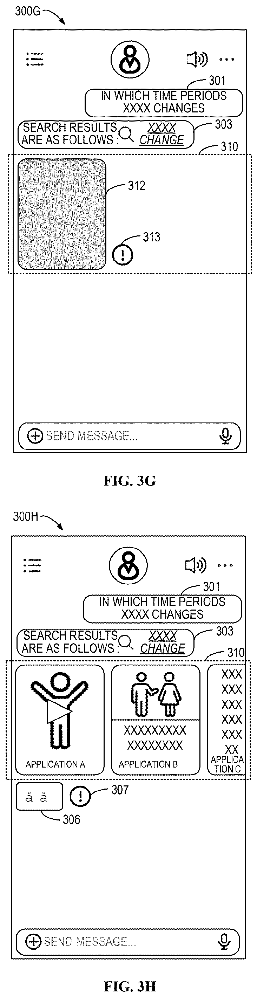

In some embodiments, if the target search result is successfully obtained, the target information item presented by the terminal device 110 may indicate content in the target search result. If the target search result is not successfully obtained, the target information item presented by the terminal device 110 indicates that the target search result is not obtained. As shown in FIG. 3G, an example 300G illustrates an example of a conversational query page. In the example 300G, if the target search result is not successfully acquired, the terminal device 110 may present a region 312 and a control 313 in the region 310. The region 312 presents a gray image, which may, for example, be presented in a gray style to indicate that a target search result is not acquired (i.e., the query is abnormal), there is no information item. For example, the terminal device 110 may present the abnormal detailed information in response to receiving a trigger operation on the control 313.

In addition to the exception caused by the inability to acquire the plurality of search results, the exception may also include, for example, an exception that cannot generate an information item based on a search result, an exception that cannot determine a response based on a search result, and so on. As shown in FIG. 3H, an example 300H illustrates an example of a conversational query page. In the example 300H, if a response (i.e., a query result) cannot be generated based on the search results, the terminal device 110 may present a set of information items in the region 310 and present a message 306 and a control 307 in the example 300H. The message 306 may indicate an abnormal reason, such as the symbol "... ...". For example, the terminal device 110 may present detailed information of the abnormality in response to receiving a trigger operation on the control 307.

In summary, according to embodiments of the present disclosure, in a case where it is determined that the query request relates to the search requirement, the search result is determined by means of the search system, and then the response to the query request is determined based on the search result. This helps to improve the accuracy and efficiency of the query.

### Example Process

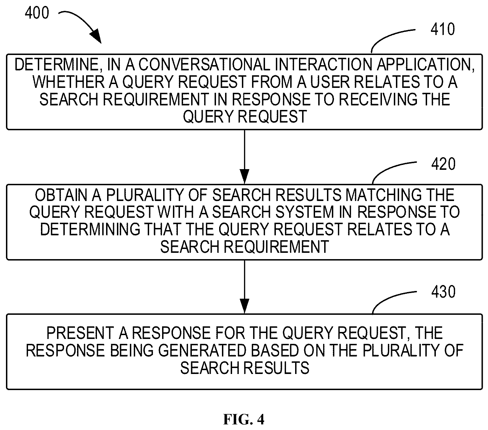

Specific details of various steps of a query have been described above, providing a method for querying. FIG. 4 shows a flowchart of a process 400 for querying according to some embodiments of the present disclosure. The process 400 may be implemented at the terminal device 110. The process 400 is described below with reference to FIG. 1.

At block 410, in a conversational interaction application, the terminal device 110 determines, in response to receiving a query request from a user, whether the query request relates to a search requirement.

At block 420, the terminal device 110 obtains, in response to determining that the query request relates to a search requirement, a plurality of search results matching the query request with the search system.

At block 430, the terminal device 110 presents a response for the query request, the response being generated based on the plurality of search results.

**In** some embodiments, determining whether the query request relates to the search requirement comprises at least any of: in response to determining that a semantic content expressed by the query request matches a predetermined search semantic associated with the search requirement, determining that the query request relates to the search requirement; or in response to determining that the query request comprises a predetermined search keyword associated with the search requirement, determining that the query request relates to the search requirement.

In some embodiments, obtaining the plurality of search results includes: in response to determining that the query request comprises a plurality of sub-requests, determining the plurality of search results matching the plurality of sub-requests respectively.

In some embodiments, determining that the query request includes a plurality of sub-requests includes: performing a semantic analysis on the query request to determine a semantic content expressed by the query request; and in response to determining that the semantic content comprises a plurality of semantic contents, determining that the query request comprises the plurality of sub-requests.

In some embodiments, obtaining the plurality of search results further comprises: determining a potential requirement of the user based on the query request, the potential requirement indicating a subsequent query request to be sent by the user after the query request; and obtaining a search result matching the potential requirement with the search system.

In some embodiments, the process 400 further includes presenting a set of information items respectively corresponding to a set of search results in the plurality of search results, where for a target information item of the set of information items, the target information item is generated based on a target search result of the set of search results corresponding to the target information item.

In some embodiments, the process 400 is implemented in a conversational query page, and presenting the set of information items includes: presenting in the conversational query page a target region corresponding to the target information item; and in response to determining that the target information item is generated, presenting the target information item in the target region.

In some embodiments, the process 400 further includes: in response to receiving a first interaction with the target information item, determining a candidate information item of the plurality of search results to be presented based on a direction of the first interaction; and presenting the candidate information item at a location associated with the target information item.

In some embodiments, the process 400 further includes: in response to receiving a second interaction for the target information item, presenting the target search result; and in response to receiving a third interaction for closing the target search result, returning to the conversational query page.

In some embodiments, the process 400 further includes presenting in the conversational query page an access control for accessing the plurality of search results; and in response to receiving a fourth interaction for the access control, presenting the plurality of search results in a list page.

In some embodiments, the process 400 further includes presenting in the conversational query page prompt information for waiting for the response.

In some embodiments, where in response to determining that the target search result is successfully obtained, determining that the target information item indicates a content in the target search result; and in response to determining that the target search result is not successfully obtained, determining that the target information item indicates that the target search result is not obtained.

### Example Apparatus and Device

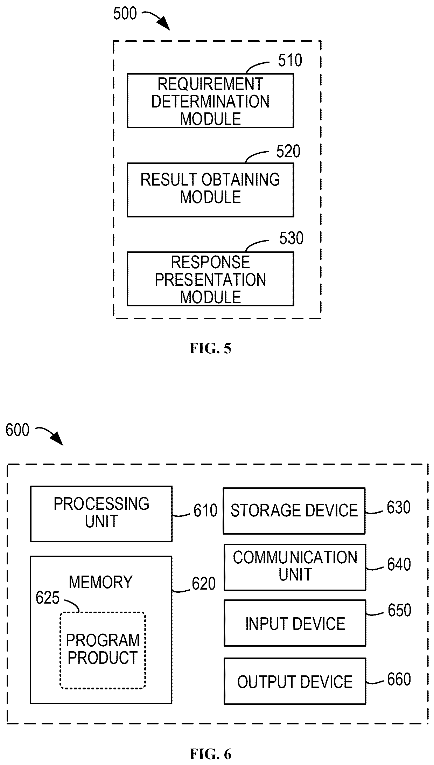

Embodiments of the present disclosure also provide a corresponding apparatus for implementing the above method or process. FIG. 5 is a schematic structural block diagram of an apparatus 500 for querying according to some embodiments of the present disclosure. The apparatus 500 may be implemented or included in the terminal device 110. The various modules/components in the apparatus 500 may be implemented by hardware, software, firmware, or any combination thereof.

As shown in FIG. 5, the apparatus 500 includes a requirement determination module 510 configured to determine, in a conversational interaction application, whether a query request relates to a search requirement in response to receiving the query request from a user. The apparatus 500 further includes a result obtaining module 520 configured to obtain, in response to determining that the query request relates to a search requirement, a plurality of search results matching the query request with a search system. The apparatus 500 further includes a response presentation module 530 configured to present a response to the query request, the response generated based on the plurality of search results.

In some embodiments, the determination module 510 is further configured to: in response to determining that a semantic content expressed by the query request matches a predetermined search semantic associated with the search requirement, determine that the query request relates to the search requirement; or in response to determining that the query request comprises a predetermined search keyword associated with the search requirement, determine that the query request relates to the search requirement.

In some embodiments, the result obtaining module 520 is further configured to: in response to determining that the query request comprises a plurality of sub-requests, determine the plurality of search results matching the plurality of sub-requests respectively.

In some embodiments, the result obtaining module 520 is further configured to: perform a semantic analysis on the query request to determine a semantic content expressed by the query request; and in response to determining that the semantic content comprises a plurality of semantic contents, determine that the query request comprises the plurality of sub-requests.

In some embodiments, the result obtaining module 520 further includes: a potential requirement determination module configured to determine a potential requirement of the user based on the query request, the potential requirement indicating a subsequent query request to be sent by the user after the query request; and a search result obtaining module configured to obtain the search result matching the potential requirement with the search system.

In some embodiments, the apparatus 500 further includes: an information item presentation module configured to present a set of information items respectively corresponding to a set of search results in the plurality of search results, where for a target information item of the set of information items, the target information item is generated based on a target search result of the group of search results corresponding to the target information item.

In some embodiments, the apparatus 500 is implemented in a conversational query page, and the information item presentation module includes: a target region presentation module configured to present in the conversational query page a target region corresponding to the target information item; and a target information item presentation module configured to in response to determining that the target information item is generated, present the target information item in the target region.

In some embodiments, the apparatus 500 further includes: a candidate information item determination module configured to determine, in response to receiving a first interaction with the target information item, a candidate information item of the plurality of search results to be presented based on a direction of the first interaction; and a candidate information item presentation module configured to present the candidate information item at a location associated with the target information item.

In some embodiments, the apparatus 500 further includes: a target search result presentation module configured to present a target search result in response to receiving a second interaction for the target information item; and a query page returning module configured to return the conversational query page in response to receiving a third interaction for closing the target search result.

In some embodiments, the apparatus 500 further includes: an access control presentation module configured to present, in the conversational query page, an access control for accessing the plurality of search results; and a multiple results presentation module configured to present, in response to receiving a fourth interaction for the access control, the plurality of search results in the list page.

In some embodiments, the apparatus 500 further includes: a prompt information presentation module configured to present, in the conversational query page, prompt information for waiting for the response.

In some embodiments, in response to determining that the target search result is successfully obtained, it is determined that the target information item indicates content in the target search result; and in response to determining that the target search result is not successfully obtained, it is determined that the target information item indicates that the target search result is not obtained.

The units and/or modules included in the apparatus 500 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all of the units and/or modules in the apparatus 500 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

It is to be understood that one or more of the above methods may be performed by a suitable electronic device or a combination of electronic devices. Such electronic device or a combination of electronic devices may include, for example, the terminal device 110 in FIG. 1.

FIG. 6 illustrates a block diagram of an electronic device 600 in which one or more embodiments of the present disclosure may be implemented. It is to be understood that the electronic device 600 illustrated in FIG. 6 is merely provided as an example, without suggesting any limitation to the functionalities and scope of embodiments described herein. The electronic device 600 shown in FIG. 6 may be configured to implement the terminal device 110 in FIG. 1.

As shown in FIG. 6, the electronic device 600 is in the form of a general-purpose electronic device. Components of the electronic device 600 may include, without limitation to, one or more processors or processing units 610, a memory 620, a storage device 630, one or more communication units 640, one or more input devices 650, and one or more output devices 660. The processing unit 610 may be a real or virtual processor and capable of performing various processes according to programs stored in the memory 620. In multiprocessor systems, a plurality of processing units executes in parallel computer-executable instructions to increase the parallel processing capability of the electronic device 600.

The electronic device 600 typically includes a plurality of computer storage media. Such media may be any available media accessible by the electronic device 600, including but not limited to, volatile and non-volatile media, detachable and non-detachable media. The memory 620 may be a volatile memory (for example, a register, cache, Random Access Memory (RAM)), non-volatile memory (for example, a Read-Only Memory (ROM), Electrically Erasable Programmable Read-Only Memory (EEPROM), a flash memory), or any combination thereof. The storage device 630 may be any detachable or non-detachable medium and may include machine-readable medium such as a flash memory drive, a magnetic disk or any other media that can be used for storing information and/or data (e.g., training data for training) and are accessible within electronic device 600.

The electronic device 600 may further include additional detachable/non-detachable, volatile/non-volatile memory media. Although not shown in FIG. 6, there may be provided a disk drive for reading from or writing into a detachable and non-volatile disk (e.g., a floppy disk), and an optical disk drive for reading from and writing into a detachable non-volatile optical disk. In such cases, each drive may be connected to a bus (not shown) via one or more data medium interfaces. The memory 620 may include a computer program product 625 having one or more program modules configured to perform various methods or actions of various embodiments of the present disclosure.

The communication unit 640 is configured to communicate with another electronic device through a communication medium. Additionally, the functionality of components of the electronic device 600 may be implemented in a single computing cluster or a plurality of computing machines capable of communicating over a communication connection. Thus, the electronic device 600 may operate in a networked environment using logical connections with one or more other servers, network personal computers (PCs), or another network node.

The input device 650 may be one or more input devices such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc., communicate with one or more devices that enable a user to interact with the electronic device 600, or communicate with any device (e.g., a network card, a modem, etc. ) that enables the electronic device 600 to communicate with one or more other electronic devices. Such communication may be performed via input/output (I/O) interfaces (not shown).

According to example embodiments of the present disclosure, there is provided a computer-readable storage medium having computer-executable instructions stored thereon, where the computer-executable instructions are executed by a processor to implement the method described above. According to example implementations of the present disclosure, there is further provided there is provided a computer program product tangibly stored on a non-transitory computer-readable medium and comprising computer-executable instructions which are executed by a processor to realize the methods described above.

Aspects of the present disclosure are described herein with reference to flowchart illustrations and/or block diagrams of methods, apparatus (systems), and computer program products according to implementations of the present disclosure. It will be understood that each block of the flowchart illustrations and/or block diagrams, and combinations of blocks in the flowchart illustrations and/or block diagrams, can be implemented by computer-readable program instructions.

These computer readable program instructions may be provided to a processing unit of a general-purpose computer, special-purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that causes a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods and computer program products according to various implementations of the present disclosure. In this regard, each block in the flowchart or block diagrams may represent a module, segment, or portion of code, which comprises one or more executable instructions for implementing the specified logical function(s). It is also to be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

Various implementations of the present disclosure have been described above for purposes of illustration, but are not intended to be exhaustive or limited to implementations disclosed. Many modifications and variations will be apparent to those of ordinary skill in the art without departing from the scope and spirit of the described implementations. The terminology used herein was chosen to best explain the principles of implementations, the practical application or technical improvement over technologies found in the marketplace, or to enable others of ordinary skill in the art to understand implementations disclosed herein.

## Claims

1. A method for querying, comprising:
determining, in a conversational interaction application, whether a query request from a user relates to a search requirement in response to receiving the query request;
obtaining a plurality of search results matching the query request with a search system in response to determining that the query request relates to a search requirement; and
presenting a response for the query request, the response being generated based on the plurality of search results.

2. The method of claim 1, wherein determining whether the query request relates to a search requirement comprises at least any of:
determining that the query request relates to the search requirement in response to determining that a semantic content expressed by the query request matches a predetermined search semantic associated with the search requirement; or
determining that the query request relates to the search requirement in response to determining that the query request comprises a predetermined search keyword associated with the search requirement.

3. The method of claim 1, wherein obtaining the plurality of search results comprises: determining the plurality of search results matching a plurality of sub-requests respectively in response to determining that the query request comprises the plurality of sub-requests.

4. The method of claim 1, wherein determining that the query request comprises the plurality of sub-requests comprises:
performing a semantic analysis on the query request to determine a semantic content expressed by the query request; and
determining that the query request comprises the plurality of sub-requests in response to determining that the semantic content comprises a plurality of semantic contents.

5. The method of claim 1, wherein obtaining the plurality of search results further comprises:
determining a potential requirement of the user based on the query request, the potential requirement indicating a subsequent query request to be sent by the user after the query request; and
obtaining a search result matching the potential requirement with the search system.

6. The method of claim 1, further comprising: presenting a set of information items respectively corresponding to a set of search results in the plurality of search results, wherein for a target information item of the set of information items, the target information item is generated based on a target search result of the set of search results corresponding to the target information item.

7. The method of claim 4, wherein the method is implemented in a conversational query page, and presenting the set of information items comprises:
presenting in the conversational query page a target region corresponding to the target information item; and
presenting the target information item in the target region in response to determining that the target information item is generated.

8. The method of claim 6, further comprising:
determining a candidate information item of the plurality of search results to be presented based on a direction of the first interaction in response to receiving a first interaction with the target information item; and
presenting the candidate information item at a location associated with the target information item.

9. The method of claim 6, further comprising:
presenting the target search result in response to receiving a second interaction for the target information item; and
returning to the conversational query page in response to receiving a third interaction for closing the target search result.

10. The method of claim 7, further comprising:
presenting in the conversational query page an access control for accessing the plurality of search results; and
presenting the plurality of search results in a list page in response to receiving a fourth interaction for the access control.

11. The method of claim 7, further comprising: presenting in the conversational query page prompt information for waiting for the response.

12. The method of claim 7, wherein:
determining that the target information item indicates a content in the target search result in response to determining that the target search result is successfully obtained; and
determining that the target information item indicates that the target search result is not obtained in response to determining that the target search result is not successfully obtained.

13. An apparatus for querying, comprising:
a requirement determination module configured to determine whether a query request from a user relates to a search requirement in response to receiving the query request;
a result obtaining module configured to obtain a plurality of search results matching the query request with a search system in response to determining that the query request relates to a search requirement; and
a response presentation module configured to present a response for the query request, the response being generated based on the plurality of search results.

14. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 12.

15. A computer-readable storage medium having a computer program stored thereon, the computer program being executable by a processor to implement the method of any of claims 1 to 12.

16. A computer program product comprising a computer program, wherein the computer program, when executed by a processor, implements the method of any of claims 1 to 12.
